# EUROPEAN PATENT SPECIFICATION

(11) **EP 2 551 558 B1**
(45) Date of publication and mention of the grant of the patent: **16.07.2014**
(21) Application number: 12163711.0
(22) Date of filing: 11.04.2012
(51) Int. Cl.: F16H 63/48, F16H 63/34

(54) **Park-lock device**
Parksperrvorrichtung
Dispositif de verrouillage de stationnement

(43) Date of publication of application: 30.01.2013
(73) Proprietor: Kongsberg Automotive AB, 56528 Mullsjö (SE)
(72) Inventor: Skogward, Kenneth, 561 48 Huskvarna (SE)
(74) Representative: Estreen, Lars J.F.

(56) References cited:
- WO-A1-2010/100987
- DE-A1- 10 021 177
- FR-A1- 2 967 226

## Description

### Technical field

The present invention relates generally to a park-lock device for a transmission.

### Background art

It is known to actuate a park-lock apparatus without a separate actuating device, i.e. wherein the park-lock may be actuated by the aid of the movement of a shift rod carrying a shift fork for performing gear shifting in a gear box of a vehicle. Such park-lock apparatus is known from WO 2010/100987 Al wherein the shift rod may be moved in an axial direction from a neutral position to either a reverse position or a parking position. A parking rod fixedly arranged to the shift rod carries a cam member slidingly arranged on the parking rod, and a coil spring arranged to be compressed by the cam member during sliding. Upon movement of the shift rod to a separate lengthwise parking position, the cam member actuates a rotational movement of a parking pawl into an engaged position with a parking gear of a transmission shaft such that rotation of the shaft is prevented.

### Summary of invention

An object of the present invention is to alleviate some of the disadvantages of the prior art and to provide an improved device for actuating a park-lock device, which increases the modularity of the device and reduces cost of manufacturing.

Another object of the invention is to provide a park-lock device that is more robust, and less susceptible to breakage or malfunction.

According to one embodiment of the invention, a park-lock device comprises a first arm arranged on a shift actuating device to move with at least a portion of the shift actuating device between at least a first position and a second position, a bracket member movable between at least a first position and a second position wherein the bracket member is adapted to actuate an engagement device to prevent rotation of a transmission output shaft in the second position, wherein the first arm and the bracket member is mechanically interconnected via a spring member, wherein when the first arm is in the first position the spring member is in a first position wherein the bracket member remains in the first position, wherein when the first arm is in the second position, the spring member is in a second position of higher potential spring energy than in the first position, wherein the spring member is biased to move the bracket member towards the second position, wherein the park-lock device further comprises an electrically actuated locking device comprising a movable locking member adapted to be releasably engaged with the bracket member, wherein when the movable locking member is in a first position, it prevents movement of the bracket member from the first position to the second position, wherein when the movable locking member is in a second position upon actuation of the park-lock device, the bracket member is allowed to move from the first position to the second position, whereby the engagement device is actuated to prevent rotation of the transmission output shaft. The same lengthwise position of the shift actuating device may thus be used for both park-lock and a separate gear position such as reverse. In this manner, one lesser shift fork position is used by the embodiment, which enables the use and implementation of an additional gear such as for instance a fifth or seventh gear. This increases the modularity of the device, which enables a manufacturer of the device to fulfill different objectives from different customers with minor adaptations. In essence, such modularity thereby reduces the cost of manufacturing.

According to another embodiment, the electrically actuated locking device comprises a solenoid and the movable locking member comprises a solenoid locking pin.

According to yet another embodiment, the engagement device comprises a rotatably arranged locking arm adapted to releasably engage with a toothed gear arranged on the circumference of the transmission output shaft, wherein the locking arm is adapted to rotate between a release position wherein an engagement portion of the locking arm is outside the outer circumference of the teeth of the toothed gear, to an engagement position wherein a portion of the locking arm engages with a section between two teeth of the toothed gear to prevent rotation of the transmission output shaft, wherein the locking arm is biased to rotate towards the release position by a spring.

According to another embodiment, the first arm is rotatably arranged on the shift actuating device.

According to another embodiment, the second arm is rotatably arranged in a fixed structure in a second portion of the second arm.

According to another embodiment, the park-lock device further comprises a third arm, wherein a first portion of the third arm is rotatably arranged in a third portion of the second arm, wherein the first arm is interconnected to the spring member via the second arm and the third arm.

According to another embodiment, the first position of the spring member is an extended position of the spring member and wherein the second position of the spring member is a compressed position of the spring member.

According to another embodiment, the spring member is a coil spring, wherein the first end of the coil spring is arranged on the second portion of the third arm, and the second end of the coil spring is arranged on a spring receiving portion fixedly arranged on the bracket member or integrated therewith, wherein the spring receiving portion has a surface plane essentially extending in a direction perpendicular to the movement direction of the bracket member between a first position and a second position.

According to another embodiment, the spring member is a coil spring, wherein the first end of the coil spring is arranged on the second portion of the third arm, and the second end of the coil spring is arranged on a spring receiving portion fixedly arranged on the bracket member or integrated therewith, wherein the spring receiving portion has a surface plane essentially extending in a direction perpendicular to the movement direction of the bracket member between a first position and a second position.

According to another embodiment, an aperture is arranged in the spring receiving portion of the bracket member, wherein the aperture is adapted to receive at least a part of the second portion of the third arm, at least when the first arm is in the second position and the solenoid locking pin is in the first position.

According to another embodiment, a first roller is pivotally arranged in a portion of the bracket member at a first pivot point, wherein the first roller is adapted to roll along a rolling portion of the locking arm opposite the engagement portion during movement of the bracket member between the first position and the second position, wherein the rolling portion comprises an inclined surface portion wherein an extension direction of the inclined surface portion is essentially non-parallel to the movement direction of the bracket member between a first position and a second position such that the inclined surface portion extends towards the bracket member.

According to another embodiment, the first roller is essentially cylinder-shaped and has a first radius, wherein the total length of the first radius and the width of the locking arm at the engagement/rolling portion, is larger than the distance from an outer radius corresponding to the teeth of the gear to the first pivot point of the first roller.

According to another embodiment, the first arm, second arm (6) and third arm are essentially shaped as flat members.

According to another embodiment, the bracket member is adapted for a sliding movement, wherein the bracket member comprises at least to side walls, wherein at least a portion of the third arm is arranged between the side walls, wherein the first roller is pivotally arranged in the side walls, and the spring receiving portion is fixedly arranged between the side walls.

According to another embodiment, bracket member comprises a projection fixedly arranged in one of the side walls and extending essentially in a direction perpendicular to the movement of the bracket member, wherein the solenoid locking pin is adapted to be releasably engaged with the projection.

According to another embodiment, the solenoid is arranged such that the solenoid locking pin moves in a direction essentially perpendicular to the projection.

According to another embodiment, the shift actuating device comprises a shift fork and a shift rod, wherein the shift fork is slidably arranged on the shift rod, and wherein the first arm is arranged on the shift fork.

According to another embodiment, the electrically actuated locking device is fixedly arranged in relation to the bracket member, wherein the movable locking member is adapted to perform a linear movement between the first and second position, whereby when the bracket member is in a second position the movable locking member is in a position along a linear movement path between and comprising the first and second position.

According to another embodiment, the electrically actuated locking device is fixedly arranged to the fixed structure . Providing the releasable engagement of the movable locking member with the bracket member allows for a robust design, less susceptible for breakage or malfunction, which robustness is further enhanced by the fixed relationship between the electrically actuated locking device and the fixed structure as well as the linear movement path of the movable locking member.

### Brief description of drawings

The invention is now described, by way of example, with reference to the accompanying drawings, in which:
Fig. 1 shows a perspective view of a park-lock device for actuation of a park-lock.
Fig. 2 shows a an exploded view of a park-lock device according to Fig. 1.
Fig. 3 shows a park-lock device according to Fig. 1 wherein the shift actuating device is in a neutral position.
Fig. 4 shows a park-lock device according to Fig. 1 wherein the shift actuating device is in a reverse position and the park-lock device is in unactuated position.
Fig. 5 shows a park-lock device according to Fig. 1 wherein the park-lock device is in an actuated position.

### Description of embodiments

In the following, a detailed description of the invention will be given. In the drawing figures, like reference numerals designate identical or corresponding elements throughout the several figures. It will be appreciated that these figures are for illustration only and are not in any way restricting the scope of the invention.

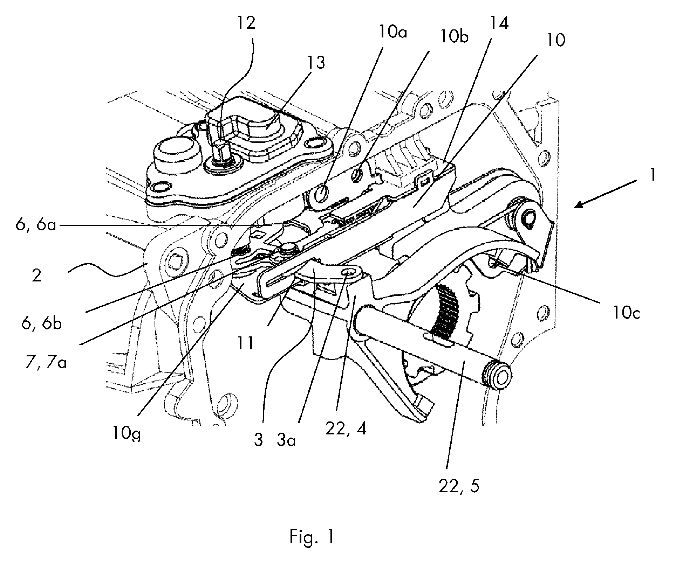

Fig. 1 shows a park-lock device 1 for actuation of a park-lock for a transmission, preferably for an automatic transmission of a vehicle. The park-lock device 1 is arranged in or in connection to a gear box 2 in order to lock the transmission of the vehicle under certain circumstances. The gear box 2 further comprises a gear shift mechanism comprising a number of shift rods and shift forks for performing gear shifting of the vehicle. Such gear shifting comprises the shifting between for instance park (P), reverse (R), neutral (N) and drive (D) positions, performed by an operator of the vehicle by shifting a gear shift lever or device (not shown) inside the vehicle manually. The shift forks may be slidably arranged on a fixed and non-movable shift rod. According to another embodiment, the shift forks may be fixedly arranged on a movable shift rod. A shift actuating device 22 comprises the shift rod and the shift fork. The park-lock device 1 comprises a carrier structure 10 for housing a plurality of the components of the park-lock device 1, and by which it is fixedly arranged in the gear box 2, for instance through bolted joints (not shown) arranged through holes 10a, 10b, 10c of the carrier structure 10. The carrier structure 10 comprises a bottom portion 10g extending in a first plane. The park-lock 1 further comprises a first arm 3 rotatably arranged in a first portion 3a on a shift fork 4 slidably arranged on a fixed shift rod 5. The first portion 3a of the first arm 3 may however be arranged on the actual shift rod 5 under the prerequisite that the shift rod is movable and moves during gear shifting, wherein the shift fork 4 is fixedly arranged on the shift rod according to one embodiment as mentioned above. The first arm 3 may be shaped essentially flat in order to save space. The shift fork 4 is further arranged on a shift rod 5, wherein the shift fork 4, shift rod 5 and first portion 3a of the first arm 3 are arranged essentially outside the carrier structure 10, i.e. are not housed by the carrier structure 10. The first arm 3 is thus adapted to move with the shift fork 4 between at least a first and a second position, thus performing gear shifting, in the exemplary embodiment described herein such shift positions correspond to a neutral (N) and a reverse (R) position. However, the number of shift positions are not limited to the ones mentioned above, but preferably also comprise at least a 4^{th} gear position and possible additional gear positions such as for instance a 5^{th} or 7^{th} gear position. A second portion 3b of the first arm 3 extends through an opening 11 into the interior of the carrier structure 10 where it is further rotatably arranged in a first portion 6a of a second arm 6. The second arm 6 may be shaped essentially flat in order to save space.

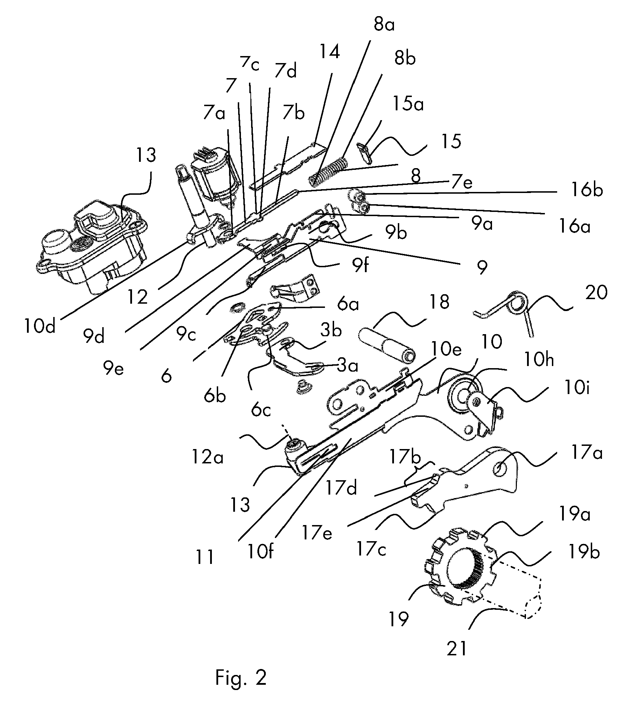

As seen in Fig. 2 wherein an exploded view of the park-lock device 1 is shown, a second portion 6b of the second arm 6 is further rotatably arranged in the carrier structure 10, the second portion 6b is preferably arranged to pivot around a pivot axis 12a such as a fixation rod 12 by which a solenoid housing 13 is fixedly arranged in the carrier structure 10 via a superstructure 10d arranged on or integral with the carrier structure 10. According to one embodiment, the solenoid housing 13 is fixedly arranged on the gear box 2. A first portion 7a of a third arm 7 is rotatably arranged in a third portion 6c of the second arm 6, and a spring member 8 is arranged on a second portion 7b of the third arm 7, a portion corresponding to slightly more than half the length of the third arm 7 according to one embodiment. The third arm 7, similar to arms 3 and 6 may preferably be shaped essentially flat in order to save space. The spring member 8 is preferably a coil spring which first end 8a is arranged substantially around the second portion 7b of the third arm 7 and is adapted to be in at least a second compressed position, wherein the spring potential energy is larger than zero and a first rest position wherein the spring potential energy is less than in the compressed position. Naturally, according to another embodiment, the second position of higher potential energy may be an extended position of the spring member 8. The third arm 7 and the spring member 8 are arranged in a bracket member 9 comprised by two side walls 9a and 9b respectively and a bottom portion 9c according to one embodiment. The third arm 7 is slidably arranged in the bracket member 9 between at least a first position and a second position, preferably by letting two slide arms 7c, 7d of the third arm 7, slide in two corresponding openings 9e, 9f of the bracket member 9. The first arm 3, second arm 6, and third arm 7 has been arranged and mechanically been interconnected such that when the first arm 3 is in a first position, the third arm 7 is in a first position. Further, due to the same mechanical interconnection between the first arm 3 and the third arm 7 a movement of the first arm 3 from a first position to a second position will cause a movement of the third arm 7 from a corresponding first position to a corresponding second position. According to another embodiment, the spring member 8 is arranged simply on an end 7e of the third arm 7. According to yet another embodiment, a first end 8a of the spring member 8 is arranged on the bracket member 9 and a second end 8b of the spring member is arranged on the third arm 7. According to one embodiment, as shown for instance in Fig. 2, the mechanical interconnection comprises a layered structure of the first arm 3, the second arm 6 and the third arm 7, wherein the arms 3, 6, 7 extends essentially in the first plane, similar to that of the bottom portion 10g. The movements of the arms are further adapted to occur in the same first plane. In a direction extending normal to the first plane, the arms 3, 6, 7 extend a short distance, and the first arm 3 is arranged proximate the bottom portion 10g, the third arm is arranged farthest away from the bottom portion 10g, and the second arm 6 is arranged between the first arm 3 and third arm 7. Portions of the arms 3, 6, 7 are adapted to slide in relation to each other. In the following, the reference direction for describing rotational movement is towards the first plane seen from the third arm 7 towards the first arm 3. During movement of the first arm 3 from a first position to a second position, the first arm essentially performs a linear movement as well as a rotational movement in a counterclockwise direction. The interconnection between the first arm 3 and the second arm 6 at the second portion 6b of the second arm, generates a rotational movement of the second arm 6 in a counterclockwise direction around pivot point or pivot axis 12a. The interconnection between the second arm 6 and the third arm 7 at the first portion 7a of the third arm, generates essentially a linear movement of the third arm 7.

The bracket member 9 is slidably arranged in the carrier structure 10 to move between at least a first and second position essentially corresponding to the movement direction of the third arm 7, in and between two side walls 10e, 10f, and/or the bottom portion 10g of the carrier structure 10. The side wall 10e is slightly shorter than the side wall 10f to allow a projection 9d to extend from the side wall 9a of the bracket member 9 in a direction essentially perpendicular to the movement direction between the first and second positions of the bracket member 9. The bottom portion 9c of the bracket member 9 essentially extends in a first plane similar to that of the bottom portion 10g of the carrier structure 10, and the side wall 9a essentially extends parallell to side wall 10e and the side wall 9b essentially extends parallell to side wall 10f respectively. The side wall 10e is further shaped so as to permit movement of the bracket member 9 between the first and second position thereof. The projection 9d is adapted to releasably engage with a solenoid locking pin 13a of the solenoid 13, movable in a direction essentially parallel to the fixation rod 12 and perpendicular to the extension direction of the projection 9d. According to one embodiment, the solenoid locking pin 13a is biased towards an extended position during rest by a biasing spring (not shown) in the solenoid housing. Actuation of the park-lock device 1 requires at least during some point, activation, of the solenoid 13. During activation, i.e. energization, of the solenoid 13, the solenoid locking pin 13a is adapted to move towards a retracted, disengaged position. According to another embodiment, any other type of electrically actuated locking device wherein a movable locking member is adapted to move between a disengaged and engaged position according to the invention may be used. Such electrically actuated locking device may comprise for instance an electrical motor. A spring receiving portion 15, in one embodiment separate from and thereby arranged between the side walls 9a, 9b of the bracket member 9, or in another embodiment shaped integrally with the bracket member 9, is adapted to receive a second end 8b of the spring member 8. The spring receiving portion 15 has a surface plane essentially extending in a direction perpendicular to the movement direction of the bracket member 9 between the first and second position thereof. According to one embodiment, an aperture 15a is arranged in the spring receiving member 15 and adapted to receive at least a part of the second portion 7b of the third arm 7, such as the end 7e of the third arm 7, in a slidable manner. The spring member 8 is allowed to be compressed between the two slide arms 7c, 7d of the third arm, and the spring receiving portion 15, during a relative movement of the third arm 7 and the bracket member 9/spring receiving portion 15. For instance, this may occur when the first portion 7a of the third arm 7 is moved in a direction towards the spring receiving portion 15 during a movement of the third arm 7 from a first position towards a second position. In another embodiment, wherein a first end 8a of the spring member 8 is arranged on the bracket member 9 and a second end 8b of the spring member 8 is arranged on the third arm 7, the spring member 8 is adapted to be extended from a first rest position wherein the spring potential energy is essentially zero, to a second extended position wherein the spring potential energy is larger than in the first position upon movement by the third arm 7 in relation to the bracket member 9, the spring 8 thus causing a pulling force on the bracket member 9 towards the second position during movement of the bracket member 9 from a first to a second position.

In this manner, the first arm 3 is mechanically interconnected to the bracket member 9 via the second arm 6, the third arm 7, and the spring member 8, such that movement of any of the mechanically interconnected parts may cause a movement of any other of the mechanically interconnected parts under certain conditions. For instance, when the solenoid pin 13a is in an engaged position, a movement of the first arm 3 from a first position to a second position, will not cause a movement of the bracket member 9 from a first position to a second position through the potential energy of the spring member 8 since the solenoid pin 13a prevents movement of the bracket member 9. Upon release of the solenoid locking pin 13a to a release position, the bracket member 9 may move from a first position to a second position since the released potential energy of the compressed spring member 8 is adapted to overcome any counteracting forces such as for instance friction forces of the bracket member 9 and any further connected parts. On the other hand, if the solenoid locking pin 13a is already in a release position, a movement of the first arm 3 from a first position to a second position will cause a movement of the bracket member 9 from a first position to second position when the spring member 8 has been sufficiently compressed whereby the potential energy of the spring is large enough to generate a pressing force on the bracket member 9 to overcome for instance said counteracting frictional forces of the bracket member 9, wherein movement of the third arm 7 is translated to a movement of the bracket member 9. In a corresponding manner, if the first arm 3 is moved from a second position towards a first position, the compression of the spring member 8 is reduced and the bracket member 9 is adapted to move from a second position towards a first position when the potential energy of the spring member 8 is sufficiently low.

A counter plate 14 fixedly arranged in the carrier structure 10, limits the movement of the bracket member 9 in a direction essentially perpendicular to the movement direction of the bracket member 9 between a first and second direction. Thus, according to one embodiment, the counter plate 14 is arranged to prevent movement in a vertically upward direction above the bracket member 9, normal to the first plane of the bottom portion 10g. At least partly, the bracket member 9 extends with a portion vertically downward from the bottom portion 10g of the carrier structure 10, i.e. outside the carrier structure 10 through an opening in the bottom portion 10g thereof, in order to function as a stop in the movement direction of the bracket member 9.

A first roller 16a, preferably cylinder-shaped with an outer circumferential surface area, is rotatably arranged in a portion of the bracket member 9 at a first pivot point. A second roller 16b, preferably similar to the first roller 16a, is rotatably arranged at a second pivot point in a portion of the bracket member 9, such as their circumferential surface areas are adapted to engage in a rolling manner. The pivot axis are defined essentially at one point in a horizontal direction corresponding to the movement direction of the bracket member 9, but a slight measure of play may be allowed for the pivot axis in a perpendicular, vertical direction, such that the pivot axis, and the rollers 16a, 16b, may move slightly in said vertical direction, normal to the first plane of the bottom portion 10g. Such play, or variation of the pivot axis, may only be allowed prior to mounting of the counter plate 14 according to one embodiment whereafter the pivot axis are essentially fixed. According to another embodiment, such play may exist also after mounting of the counter plate 14. An opening is arranged in one of the side walls 9a, 9b with a diameter corresponding to the diameter of the first roller for facilitated assembly. The second roller 16b is prevented from falling off the bracket member by the counter plate 14.

The park-lock device 1, further comprises an engagement device 17, which according to one embodiment comprises a locking arm 17, rotatably arranged in the carrier structure 10, at a pivot portion 17a, wherein the locking arm 17 is adapted to pivot around a rod 18. The rod 18 is shaped with a tapered surface for ease of insertion during assembly through rod receiving sections 10h, 1 Oi, of the carrier structure 10 each comprising two holes, wherein one hole has a larger diameter than the other. The locking arm 17 further comprises a roll portion 17b adapted to engage with the circumferential surface area of at least the first roller 16a. The roll portion 17b comprises a straight portion 17e, wherein the extension direction of the straight portion 17e is essentially parallel to the extension direction of the bracket member 9 in a movement direction of the bracket member 9 between a first and second position, at least when the bracket member 9 is in a first position and the locking arm 17 is in a release position. The roll portion 17b further comprises an inclined surface portion 17d wherein the extension direction of the inclined surface portion 17d is essentially non-parallel to the extension direction of the bracket member 9 in the movement direction of the bracket member 9 between a first position and a second position such that the inclined surface portion 17b extends towards the bracket member 9. The locking arm 17 further comprises an engagement portion 17c, opposite the roll portion 17b, wherein the engagement portion 17c comprises a projection adapted to releasably engage with a toothed gear 19 arranged on a circumference of a transmission output shaft 21 to prevent rotation of the transmission output shaft 21. The locking arm 17 is thus adapted to rotate between release position wherein an engagement portion 17c of the locking arm 17 is outside the outer circumference of the teeth 19a of the gear 19, to an engagement position wherein an engagement portion 17c engages between two teeth 19a of the toothed gear 19 to prevent rotation of the transmission output shaft 21. According to one embodiment, the engagement portion is adapted to abut the surface portion 19b of the toothed gear 19 between two teeth 19a during engagement. According to one embodiment, a second spring 20 is arranged around the rod 18 and in connection to the locking arm 17 to bias the locking arm 17 into a release position. This biasing functionality of the locking arm 17 may be embodied in alternative ways, for instance by arranging one end of a coil spring at a point off-set the pivot point and another end of the coil spring for instance in the gear box 2. According to one embodiment, the essentially cylinder-shaped roller 16a has a first radius, wherein the total length of the first radius and the width of the locking arm 17 at the engagement/roll portion 17b, is larger than the distance from an outer radius corresponding to the teeth 19a of the gear 19, arranged proximate the roller 16a, to the first pivot axis of the first roller 16a taking into consideration any existing play of the first pivot axis.

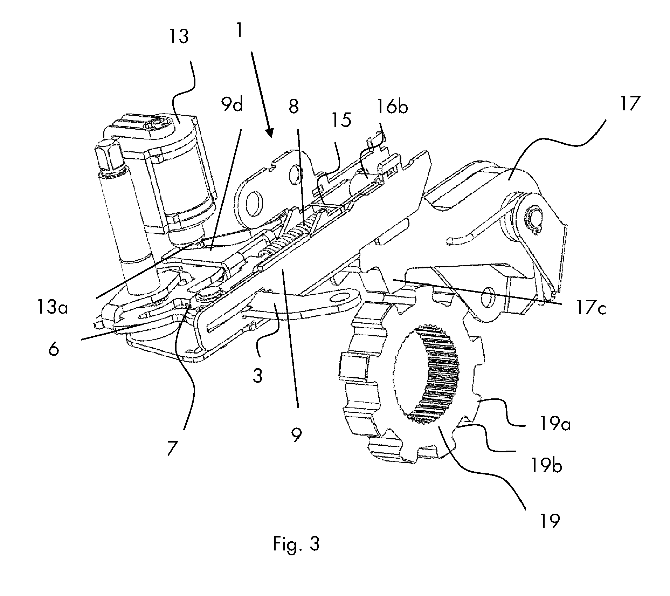

Fig. 3 shows the park-lock device 1 in a simplified manner wherein certain parts have been removed. The shift fork 4 has in the gear box 2 been brought into a position corresponding to a neutral (N) position of the gear shift mechanism, wherein the gear shift lever has been moved by an operator of a vehicle to the N position. Hence, the first arm 3 is in a first position. The third arm 7 is thus in a first position as well, wherein the spring member 8 is in an extended, rest position, such that the spring member 8 is relatively relaxed. The pressure force against the bracket member 9 is thus very limited or even zero, and bracket member 9 is held in a first position wherein the roller 16a is located to rest on the straight portion 17e of the roll portion 17b. The solenoid locking pin 13a is in an extended, engaged position according to the embodiment shown in Fig. 3, but may be in a retracted, release position according to another embodiment.

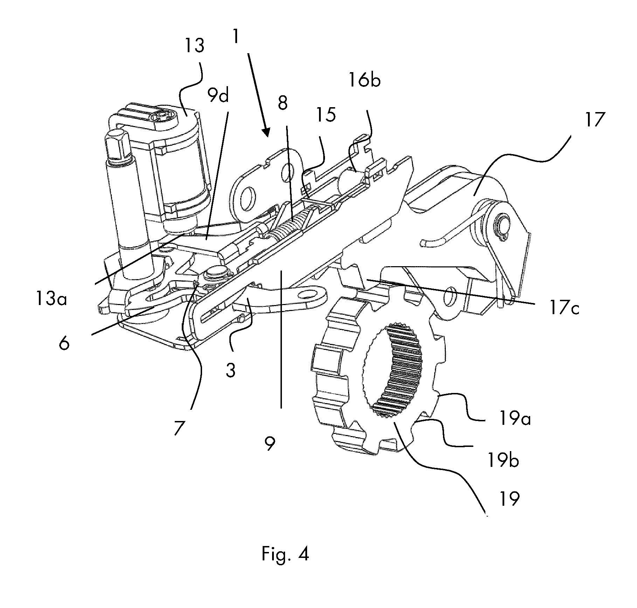

Fig. 4 shows the park-lock device 1 in another position, wherein the shift fork 4 has been brought into a position corresponding to a reverse (R) position of the gear shift, i.e. the first arm 3 is in a second position. An operator of the vehicle has thus moved a gear shift lever to an R position. The movement of the first arm 3 into a second position has thus caused a movement of the third arm 7 into a second position. The solenoid locking pin 13a is in an engaged position, wherein movement of the bracket member 9 towards a second position is prevented due to the engagement between the solenoid locking pin 13a and the projection 9d. The spring member 8 has thereby been brought into a compressed position between the third arm 7 and the spring receiving member 15, of relatively higher potential energy than an extended, release position of the spring member 8. Hence, if as described above for Fig. 3, the solenoid locking pin 13a is in a release position in the neutral (N) position, the movement of the first arm 3 is preceded by the movement of the solenoid locking pin 13a into an engagement position after a certain time frame wherein a further movement of gear shift lever into the P position is not intended.

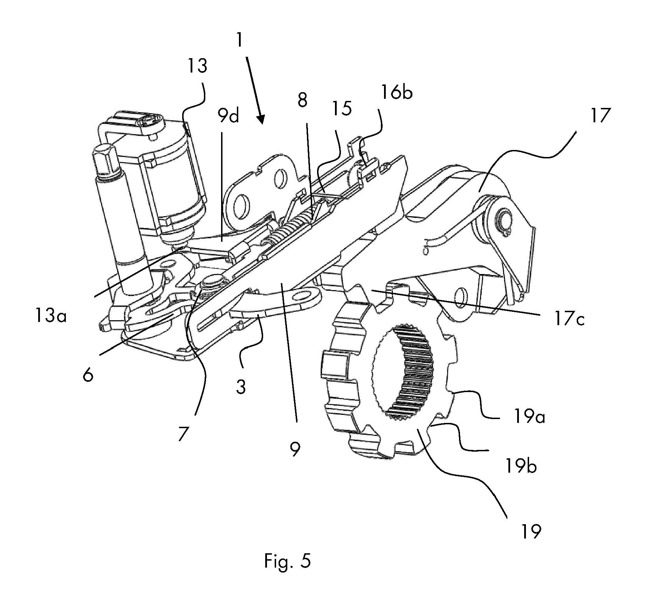

Fig. 5 shows the park-lock device 1 in yet another position, wherein the shift fork 4 has been brought into a position corresponding to a reverse (R) position of the gear shift mechanism, i.e. the first arm 3 is in a second position similar to the position of Fig. 4. An operator of the gear shift lever has further moved the gear shift lever to a P position, whereby the park-lock device 1 has been actuated. The solenoid locking pin 13a has thus been brought into a disengaged position by the actuation of the park-lock device 1 through the activation of the solenoid 13. The thereby released force generated by the potential energy of the compressed spring 8 is thus sufficient to push the bracket member 9 to slide towards and into a second position. During this movement, the roller 16a rolls along the roll portion 17b of the locking arm 17. The roller 16a starts to roll along a straight portion 17e and reaches an inclined surface portion 17d of the locking arm 17 after a certain distance. Rolling of the roller 16a along the inclined surface 17d, causes a rotational movement of the locking arm 17 to rotate from a release position towards an engagement position as seen in Fig. 5, wherein the engagement portion 17c of the locking arm 17 has been brought into engagement, i.e. engages between two teeth 19a of the toothed gear 19, wherein rotation of a transmission output shaft 21 is prevented. It is duly noted that this position of an actuated park-lock device 1 is reachable in a plurality of ways according to various embodiments. Either, the solenoid locking pin 13a is in an engaged position preventing movement of the bracket member 9 from a first to a second position when an operator causes the shift actuating device22/shift fork 4 to move from a neutral to a reverse position, wherein the operator moves the gear shift lever directly from an N position to a P position. Actuation of the park-lock device 1 is in this embodiment enabled by the actuation of the solenoid locking pin 13a wherein the full potential energy of the spring member 8 is released. Alternatively, an operator may bring the shift actuating device 22/shift fork 4 from a neutral to a park position, wherein the operator moves the gear shift lever directly from an N position to a P position, wherein the solenoid locking pin 13a is moved into or remains in a release position directly wherein the bracket member 9 is allowed to move from a first to a second position without hindrance from the solenoid locking pin 13a. In a third situation, wherein an operator shifts the gear shift lever from an R position to a P position, the actuation of the park-lock device 1 is enabled similar to the first situation wherein the solenoid locking pin 13a is moved from an engaged position to a release position thus releasing the full potential of the spring member 8. In a fourth embodiment, logic to control the gear shifting of the gear box 2 move the shift actuating device 22/shift fork 4 into a neutral position, releases the solenoid locking pin 13a and then moves the shift actuating device 22 and shift fork 4 into the reverse position. In a position wherein the park-lock device 1 has been actuated, and the bracket member 9 consequently is in a second position, the solenoid locking pin 13a is held in a disengaged position also after inactivation of the solenoid 13 by resting against an upper surface of the projection 9d of the bracket member 9. If the operator seeks shifting from park to reverse, and thus moves the shift lever from P to R, the same logic of the gear box 2 initiates movement of the shift actuating device 22/shift fork 4 from a reverse position (P) position to a neutral position (N), brings the solenoid locking pin 13a into an engaged position, and moves the shift actuating device 22/shift fork 4 into reverse again, wherein the position corresponding to Fig. 4 is reached.

During a movement from P to e.g. N or R, the first arm 3 is moved from a second to a first position. The mechanical interconnection between the first arm 3 and the third arm 7 as described above generates a pulling movement of the third arm 7 from a second towards a first position as well, as a result of this. During this movement, the distance between the slide arms 7c, 7d of the third arm 7 and the spring receiving portion 15 is allowed to initially increase, i.e. the spring member 8 is allowed to initially be extended wherein the potential energy of the spring member 8 is decreasing. Due to roller 16a resting on the inclined surface portion 17d of the locking arm 17, and the biasing force of the locking arm 17 towards a release position, the bracket member 9 is allowed to be pushed by the locking arm 17 towards a first position. At a certain point, essentially at or close its first position of the bracket member 9, the projection 9d of the bracket member 9 will have moved passed the solenoid locking pin 13a, wherein a biasing spring (not shown) acting on the solenoid locking pin 13a towards engaged position, will bring the solenoid locking pin 13a in an engaged position. Hence, the projection 9d is preferably shaped with a sufficient width in a movement direction of the bracket member 9 such that only one first and short activation of the solenoid 13 is needed for actuating the park lock device 1 as well as unactuating the park-lock device 1. Thus, according to this embodiment, it is not necessary to activate the solenoid locking pin 13a again to be able to move the bracket member 9 from a second to a first position, because the solenoid locking pin 13a remains in a disengaged state the entire time the bracket member 9 is in a second position, i.e. during the actuation of the park-lock device 1.

According to one embodiment, wherein the electrically actuated locking device 13 is fixedly arranged to for instance the carrier structure 10 or the gearbox 2, the electrically actuated locking device 13 is fixedly arranged in relation also to the bracket member 9. From this, it can be understood that the movable locking member 13a is adapted to perform solely a linear movement, i.e. along a straight line or movement path, between the engaged and the retracted position, i.e. a first and second position, whereby when the bracket member 9 is in a second position the movable locking member 13a is in a position along a linear movement path between and comprising the first and second position.

A preferred embodiment of a park-lock device according to the invention has been described. However, the person skilled in the art realizes that this can be varied within the scope of the appended claims without departing from the inventive idea.

All the described alternative embodiments above or parts of an embodiment can be freely combined without departing from the inventive idea as long as the combination is within the scope of the appended claims.

## Claims

1. A park-lock device (1) comprising a first arm (3) arranged on a shift actuating device (22) to move with at least a portion of the shift actuating device (22) between at least a first position and a second position,
a bracket member (9) movable between at least a first position and a second position wherein the bracket member (9) is adapted to actuate an engagement device (17) to prevent rotation of a transmission output shaft (21) in the second position, wherein the first arm (3) and the bracket member (9) is mechanically interconnected via a spring member (8), wherein when the first arm (3) is in the first position the spring member (8) is in a first position wherein the bracket member (9) remains in the first position, wherein when the first arm (3) is in the second position, the spring member (8) is in a second position of higher potential spring energy than in the first position, wherein the spring member (8) is biased to move the bracket member (9) towards the second position, **characterized in that** the park-lock device(1) further comprises an electrically actuated locking device (13) comprising a movable locking member (13a) adapted to be releasably engaged with the bracket member (9), wherein when the movable locking member (13a) is in a first position, it prevents movement of the bracket member (9) from the first position to the second position, wherein when the movable locking member (13a) is in a second position upon actuation of the park-lock device 1, the bracket member (9) is allowed to move from the first position to the second position, whereby the engagement device (17) is actuated to prevent rotation of the transmission output shaft (21).

2. A park-lock device (1) according to claim 1, **characterized in that** the electrically actuated locking device (13) comprises a solenoid (13) and the movable locking member (13a) comprises a solenoid locking pin (13a).

3. A park-lock device (1) according to any of the previous claims 1-2, **characterized in that** the engagement device (17) comprises a rotatably arranged locking arm (17) adapted to releasably engage with a toothed gear (19) arranged on the circumference of the transmission output shaft (21), wherein the locking arm (17) is adapted to rotate between a release position wherein an engagement portion (17c) of the locking arm (17) is outside the outer circumference of the teeth (19a) of the toothed gear (19), to an engagement position wherein a portion of the locking arm (17) engages with a section between two teeth (19a) of the toothed gear (19) to prevent rotation of the transmission output shaft (21), wherein the locking arm (17) is biased to rotate towards the release position by a spring (20).

4. A park-lock device (1) according to any of the previous claims 1-3, **characterized in that** the first arm (3) is rotatably arranged on the shift actuating device (22).

5. A park-lock device (1) according to claim 4, **characterized in that** the park-lock device (1) further comprises a second arm (6), wherein the first arm (3) is rotatably arranged in a first portion (6a) of the second arm (6), wherein first arm (3) is mechanically interconnected to the spring member (8) via the second arm (6).

6. A park-lock device (1) according to claim 5, **characterized in that** the second arm (6) is rotatably arranged in a fixed structure (10, 2) in a second portion (6b) of the second arm (6).

7. A park-lock device (1) according to claim 6, **characterized in that** the park-lock device (1) further comprises a third arm (7), wherein a first portion (7a) of the third arm (7) is rotatably arranged in a third portion (6c) of the second arm (6), wherein the first arm (3) is interconnected to the spring member (8) via the second arm (6) and the third arm (7).

8. A park-lock device (1) according to any of the previous claims, **characterized in that** the first position of the spring member (8) is an extended position of the spring member (8) and wherein the second position of the spring member 8 is a compressed position of the spring member (8).

9. A park-lock device (1) according to claim 8, **characterized in that** the spring member (8) is a coil spring (8), wherein the first end (8a) of the coil spring (8) is arranged on the second portion (7b) of the third arm (7), and the second end (8b) of the coil spring (8) is arranged on a spring receiving portion (15) fixedly arranged on the bracket member (9) or integrated therewith, wherein the spring receiving portion (15) has a surface plane essentially extending in a direction perpendicular to the movement direction of the bracket member (9) between a first position and a second position.

10. A park-lock device (1) according to claim 9, **characterized in that** an aperture (15a) is arranged in the spring receiving portion (15) of the bracket member (9), wherein the aperture (15a) is adapted to receive at least a part of the second portion (7b) of the third arm (7), at least when the first arm (3) is in the second position and the movable locking member (13a) is in the first position.

11. A park-lock device (1) according to claim 3 or claim 3 and any of claims 4-10, **characterized in that** a first roller (16a) is pivotally arranged in a portion of the bracket member (9) at a first pivot point, wherein the first roller (16a) is adapted to roll along a rolling portion (17b) of the locking arm (17) opposite the engagement portion (17c) during movement of the bracket member (9) between the first position and the second position, wherein the rolling portion (17b) comprises an inclined surface portion (17d) wherein an extension direction of the inclined surface portion (17d) is essentially non-parallel to the movement direction of the bracket member (9) between a first position and a second position such that the inclined surface portion (17d) extends towards the bracket member (9).

12. A park-lock device (1) according to claim 11, **characterized in that** the first roller (16a) is essentially cylinder-shaped and has a first radius, wherein the total length of the first radius and the width of the locking arm (17) at the engagement/rolling portion, is larger than the distance from an outer radius corresponding to the teeth (19a) of the gear (19) to the first pivot point of the first roller (16a).

13. A park-lock device (1) according to claim 7 or claim 7 and any of the claims 8-12, **characterized in that** the first arm (3), second arm (6) and third arm (7) are essentially shaped as flat members.

14. A park-lock device (1) according to claim 7 and 9 and any of the claims 11-12 , **characterized in that** the bracket member (9) is adapted for a sliding movement, wherein the bracket member (9) comprises at least to side walls (9a, 9b), wherein at least a portion of the third arm (7) is arranged between the side walls (9a, 9b), wherein the first roller (16a) is pivotally arranged in the side walls (9a, 9b), and the spring receiving portion (15) is fixedly arranged between the side walls (9a, 9b).

15. A park-lock device (1) according to claim 14, **characterized in that** bracket member (9) comprises a projection (9d) fixedly arranged in one of the side walls (9a, 9b) and extending essentially in a direction perpendicular to the movement of the bracket member (9), wherein the movable locking member (13a) is adapted to be releasably engaged with the projection (9d).

16. A park-lock device (1) according claim 15 **characterized in that** the solenoid (13) is arranged such that the movable locking member (13a) moves in a direction essentially perpendicular to the projection (9d).

17. A park-lock device (1) according to any of the previous claims, **characterized in that** the shift actuating device (22) comprises a shift fork (4) and a shift rod (5), wherein the shift fork (4) is slidably arranged on the shift rod (5), and wherein the first arm (3) is arranged on the shift fork (4).

18. A park-lock device (1) according to any of the previous claims **characterized in that** the electrically actuated locking device (13) is fixedly arranged in relation to the bracket member (9), wherein the movable locking member (13a) is adapted to perform a linear movement between the first and second position, whereby when the bracket member (9) is in a second position the movable locking member (13a) is in a position along a linear movement path between and comprising the first and second position.

19. A park-lock device (1) according to any of the previous claims 6-18, **characterized in that** the electrically actuated locking device (13) is fixedly arranged to the fixed structure (10, 2).

## Patentansprüche

1. Parksperrvorrichtung (1), aufweisend einen ersten Arm (3), der an einer Schaltwählvorrichtung (22) angeordnet ist, um sich mit wenigstens einem Teil der Schaltwählvorrichtung (22) zwischen wenigstens einer ersten Position und einer zweiten Position zu bewegen,
ein Klammerelement (9), das zwischen wenigstens einer ersten Position und einer zweiten Position beweglich ist, wobei das Klammerelement (9) ausgeführt ist, um eine Eingriffsvorrichtung (17) zum Verhindern einer Drehbewegung einer Kraftübertragungs-Ausgangswelle (21) in der zweiten Position zu verhindern, wobei der erste Arm (3) und das Klammerelement (9) über ein Federelement (8) miteinander verbunden sind, wobei, wenn sich der erste Arm (3) in der ersten Position befindet, das Federelement (8) sich in einer ersten Position befindet, wobei das Klammerelement (9) in der ersten Position verbleibt, wobei, wenn sich der erste Arm (3) in der zweiten Position befindet, das Federelement (8) sich in einer zweiten Position mit höherer potenzieller Federenergie als in der ersten Position befindet, wobei das Federelement (8) vorgespannt ist, um das Klammerelement (9) in Richtung zur zweiten Position zu bewegen, **dadurch gekennzeichnet, dass** die Parksperrvorrichtung (1) ferner eine elektrisch betätigte Sperrvorrichtung (13) aufweist, die ein bewegliches Sperrelement (13a) aufweist, das für einen lösbaren Eingriff mit dem Klammerelement (9) angeordnet ist, wobei das bewegliche Sperrelement (13a), wenn es sich in einer ersten Position befindet, eine Bewegung des Klammerelements (9) aus der ersten Position in die zweite Position verhindert, und wobei, wenn sich das bewegliche Sperrelement (13a) in einer zweiten Position nach Betätigen der Parksperrvorrichtung (1) befindet, das Klammerelement (9) sich aus der ersten Position in die zweite Position bewegen darf, wobei das Eingriffselement (17) betätigt wird, um eine Drehbewegung der Kraftübertragungs-Ausgangswelle (21) zu verhindern.

2. Parksperrvorrichtung (1) nach Anspruch 1, **dadurch gekennzeichnet, dass** das elektrisch betätigte Sperrelement (13) einen Elektromagneten (13) aufweist und das Sperrelement (13a) einen Elektromagnet-Sperrzapfen (13a) aufweist.

3. Parksperrvorrichtung (1) nach einem der vorhergehenden Ansprüche 1 bis 2, **dadurch gekennzeichnet, dass** die Eingriffsvorrichtung (17) einen drehbar angeordneten Sperrarm (17) aufweist, der für einen lösbaren Eingriff mit einem auf dem Umkreis der Kraftübertragungs-Ausgangswelle (21) angeordneten Zahnrad (19) angeordnet ist, wobei der Sperrarm (17) für ein Drehen zwischen einer Entsperrposition, wobei sich eine Eingriffsposition (17c) des Sperrarms (17) außerhalb des äußeren Umkreises der Zähne (19a) des Zahnrads (19) befindet, bis zu einer Eingriffsposition, wobei ein Teil des Sperrarms (17) mit einem Bereich zwischen zwei Zähnen (19a) des Zahnrads (19) eingreift, um ein Drehen der Kraftübertragungs-Ausgangswelle (21) zu verhindern, wenn der Sperrarm (17) durch eine Feder (20) für eine Drehung in Richtung zur Entsperrposition vorgespannt ist.

4. Parksperrvorrichtung (1) nach einem der vorhergehenden Ansprüche 1 bis 3, **dadurch gekennzeichnet, dass** der erste Arm (3) drehbar auf der Schaltwählvorrichtung (22) angeordnet ist.

5. Parksperrvorrichtung (1) nach Anspruch 4, **dadurch gekennzeichnet, dass** die Parksperrvorrichtung (1) ferner einen zweiten Arm (6) aufweist, wobei der erste Arm (3) drehbar in einer ersten Position (6a) des zweiten Arms (6) angeordnet ist, wobei der erste Arm (3) über den zweiten Arm (6) mechanisch mit dem Federelement (8) verbunden ist.

6. Parksperrvorrichtung (1) nach Anspruch 5, **dadurch gekennzeichnet, dass** der zweite Arm (6) drehbar in einer festen Konstruktion (10, 2) in einer zweiten Position (6b) des zweiten Arms (6) angeordnet ist.

7. Parksperrvorrichtung (1) nach Anspruch 6, **dadurch gekennzeichnet, dass** die Parksperrvorrichtung (1) einen dritten Arm (7) aufweist, wobei ein erster Teil (7a) des dritten Arms (7) drehbar in einem dritten Teil (6c) des zweiten Arms (6) angeordnet ist, wobei der erste Arm (3) über den zweiten Arm (6) und den dritten Arm (7) mit dem Federelement (8) verbunden ist.

8. Parksperrvorrichtung (1) nach einem der vorhergehenden Ansprüche, **dadurch gekennzeichnet, dass** die erste Position des Federelements (8) eine verlängerte Position des Federelements (8) ist, und wobei die zweite Position des Federelements (8) eine zusammengedrückte Position des Federelements (8) ist.

9. Parksperrvorrichtung (1) nach Anspruch 8, **dadurch gekennzeichnet, dass** das Federelement (8) eine Schraubenfeder (8) ist, wobei das erste Ende (8a) der Schraubenfeder (8) auf dem zweiten Teil (7b) des dritten Arms (7) und das zweite Ende (8b) der Schraubenfeder (8) auf einem Federaufnahmeteil (15), der fest auf dem Klammerelement (9) angeordnet oder in dieses integriert ist, angeordnet ist, wobei der Federaufnahmeteil (15) eine Flächenebene aufweist, die sich im Wesentlichen in einer Richtung rechtwinklig zur Bewegungsrichtung des Klammerelements (9) zwischen einer ersten Position und einer zweiten Position erstreckt.

10. Parksperrvorrichtung (1) nach Anspruch 9, **dadurch gekennzeichnet, dass** eine Öffnung (15a) im Federaufnahmeteil (15) des Klammerelements (9) angeordnet ist, wobei die Öffnung (15a) ausgeführt ist, um wenigstens einen Teil des zweiten Teils (7b) des dritten Arms (7) aufzunehmen, wenigstens, wenn sich der erste Arm (3) in der zweiten Position befindet und das bewegliche Sperrelement (13a) sich in der ersten Position befindet.

11. Parksperrvorrichtung (1) nach Anspruch 3 oder Anspruch 3 und einem der Ansprüche 4 bis 10, **dadurch gekennzeichnet, dass** eine erste Walze (16a) schwenkbar in einem Teil des Klammerelements (9) an einem ersten Schwenkpunkt angeordnet ist, wobei die erste Walze (16a) so angeordnet ist, dass sie entlang einem Walzenteil (17b) des Sperrarms (17) gegenüber dem Eingriffsteil (17c) während der Bewegung des Klammerelements (9) zwischen der ersten Position und der zweiten Position rollt, wobei der Walzenteil (17b) einen geneigten Flächenteil (17d) aufweist, wobei eine Ausdehnungsrichtung des geneigten Flächenteils (17d) im Wesentlichen nicht-parallel zur Bewegungsrichtung des Klammerelements (9) zwischen einer ersten Position und einer zweiten Position ist, so dass sich der geneigte Flächenteil (17d) in Richtung zum Klammerelement (9) erstreckt.

12. Parksperrvorrichtung (1) nach Anspruch 11, **dadurch gekennzeichnet, dass** die erste Walze (16a) im Wesentlichen zylinderförmig ist und einen ersten Radius aufweist, wobei die Gesamtlänge des ersten Radius und die Breite des Sperrarms (17) am Eingriffs-/Walzenteil größer ist als der Abstand von einem äußeren Radius entsprechend den Zähnen (19a) des Zahnrads (19) zum ersten Schwenkpunkt der ersten Walze (16a) .

13. Parksperrvorrichtung (1) nach Anspruch 7 oder Anspruch 7 und einem der Ansprüche 8 bis 12, **dadurch gekennzeichnet, dass** der erste Arm (3), zweite Arm (6) und dritte Arm (7) im Wesentlichen die Form flacher Elemente aufweisen.

14. Parksperrvorrichtung (1) nach Anspruch 7 und 9 und einem der Ansprüche 11 bis 12, **dadurch gekennzeichnet, dass** das Klammerelement (9) für eine gleitende Bewegung angeordnet ist, wobei das Klammerelement (9) wenigstens zwei Seitenwände (9a, 9b) aufweist, wobei wenigstens ein Teil des dritten Arms (7) zwischen den Seitenwänden (9a, 9b) angeordnet ist, wobei die erste Walze (16a) schwenkbar in den Seitenwänden (9a, 9b) angeordnet ist, und wobei der Federaufnahmeteil (15) fest zwischen den Seitenwänden (9a, 9b) angeordnet ist.

15. Parksperrvorrichtung (1) nach Anspruch 14, **dadurch gekennzeichnet, dass** das Klammerelement (9) einen fest in einer der Seitenwände (9a, 9b) angeordneten und sich im Wesentlichen in einer Richtung rechtwinklig zur Bewegung des Klammerelements (9) erstreckenden Vorsprung (9d) aufweist, wobei das bewegliche Sperrelement (13a) für einen lösbaren Eingriff mit dem Vorsprung (9d) angeordnet ist.

16. Parksperrvorrichtung (1) nach Anspruch 15, **dadurch gekennzeichnet, dass** der Elektromagnet (13) so angeordnet ist, dass sich das bewegliche Sperrelement (13a) in einer im Wesentlichen rechtwinkligen Richtung zum Vorsprung (9d) bewegt.

17. Parksperrvorrichtung (1) nach einem der vorhergehenden Ansprüche, **dadurch gekennzeichnet, dass** die Schaltwählvorrichtung (22) eine Schaltgabel (4) und eine Schaltstange (5) aufweist, wobei die Schaltgabel (4) gleitbar auf der Schaltstange (5) angeordnet ist, und wobei der erste Arm (3) auf der Schaltgabel (4) angeordnet ist.

18. Parksperrvorrichtung (1) nach einem der vorhergehenden Ansprüche, **dadurch gekennzeichnet, dass** die elektrisch betätigte Sperrvorrichtung (13) im Verhältnis zum Klammerelement (9) fest angeordnet ist, wobei das bewegliche Sperrelement (13a) für ein Durchführen einer linearen Bewegung zwischen der ersten und zweiten Position angeordnet ist, wobei, wenn sich das Klammerelement (9) in einer zweiten Position befindet, sich das bewegliche Sperrelement (13a) in einer Position entlang einer linearen Bewegungsstrecke zwischen der ersten und zweiten Position befindet und diese umfasst.

19. Parksperrvorrichtung (1) nach einem der vorhergehenden Ansprüche 6 bis 18, **dadurch gekennzeichnet, dass** die elektrisch betätigte Sperrvorrichtung (13) fest an der festen Konstruktion (10, 2) angeordnet ist.

## Revendications

1. Dispositif de verrouillage de stationnement (1) comprenant un premier bras (3) agencé sur un dispositif de changement de vitesse (22) pour se déplacer avec au moins une partie du dispositif de changement de vitesse (22) entre au moins une première position et une seconde position,
un élément de support (9) mobile entre au moins une première position et une seconde position dans lesquelles l'élément de support (9) est conçu pour actionner un dispositif de mise en prise (17) pour empêcher la rotation d'un arbre de sortie de transmission (21) dans la seconde position, dans lequel le premier bras (3) et l'élément de support (9) sont mécaniquement reliés via un élément à ressort (8), dans lequel lorsque le premier bras (3) est dans la première position, l'élément à ressort (8) est dans une première position dans laquelle l'élément de support (9) reste dans la première position, dans lequel lorsque le premier bras (3) est dans la seconde position, l'élément à ressort (8) est dans une seconde position d'énergie potentielle élastique plus élevée que dans la première position, dans lequel l'élément à ressort (8) est sollicité pour déplacer l'élément de support (9) vers la seconde position, **caractérisé en ce que** le dispositif de verrouillage de stationnement (1) comprend en outre un dispositif de verrouillage à commande électrique (13) comprenant un élément de verrouillage mobile (13a) conçu pour être en prise de façon amovible avec l'élément de support (9), dans lequel lorsque l'élément de verrouillage mobile (13a) est dans une première position, il empêche le mouvement de l'élément de support (9) de la première position à la seconde position, dans lequel lorsque l'élément de verrouillage mobile (13a) est dans une seconde position lors de l'actionnement du dispositif de verrouillage de stationnement 1, l'élément de support (9) est autorisé à se déplacer de la première position à la seconde position, de sorte que le dispositif de mise en prise (17) est actionné pour empêcher la rotation de l'arbre de sortie de transmission (21).

2. Dispositif de verrouillage de stationnement (1) selon la revendication 1, **caractérisé en ce que** le dispositif de verrouillage à commande électrique (13) comprend un solénoïde (13) et l'élément de verrouillage mobile (13a) comprend un ergot de verrouillage de solénoïde (13a).

3. Dispositif de verrouillage de stationnement (1) selon l'une quelconque des revendications précédentes 1 et 2, **caractérisé en ce que** le dispositif de mise en prise (17) comprend un bras de verrouillage agencé en rotation (17) conçu pour mettre en prise de façon amovible un engrenage denté (19) agencé sur la circonférence de l'arbre de sortie de transmission (21), dans lequel le bras de verrouillage (17) est conçu pour tourner entre une position de libération dans laquelle une partie de mise en prise (17c) du bras de verrouillage (17) est à l'extérieur de la circonférence extérieure des dents (19a) de l'engrenage denté (19), jusqu'à une position de mise en prise dans laquelle une partie du bras de verrouillage (17) met en prise une section entre deux dents (19a) de l'engrenage denté (19) pour empêcher la rotation de l'arbre de sortie de transmission (21), dans lequel le bras de verrouillage (17) est sollicité pour tourner vers la position de libération par un ressort (20).

4. Dispositif de verrouillage de stationnement (1) selon l'une quelconque des revendications précédentes 1 à 3, **caractérisé en ce que** le premier bras (3) est agencé en rotation sur le dispositif de changement de vitesse (22).

5. Dispositif de verrouillage de stationnement (1) selon la revendication 4, **caractérisé en ce que** le dispositif de verrouillage de stationnement (1) comprend en outre un deuxième bras (6), dans lequel le premier bras (3) est agencé en rotation dans une première partie (6a) du deuxième bras (6), dans lequel le premier bras (3) est mécaniquement relié à l'élément à ressort (8) via le deuxième bras (6).

6. Dispositif de verrouillage de stationnement (1) selon la revendication 5, **caractérisé en ce que** le deuxième bras (6) est agencé en rotation dans une structure fixe (10, 2) dans une deuxième partie (6b) du deuxième bras (6).

7. Dispositif de verrouillage de stationnement (1) selon la revendication 6, **caractérisé en ce que** le dispositif de verrouillage de stationnement (1) comprend en outre un troisième bras (7), dans lequel une première partie (7a) du troisième bras (7) est agencée en rotation dans une troisième partie (6c) du deuxième bras (6), dans lequel le premier bras (3) est relié à l'élément à ressort (8) via le deuxième bras (6) et le troisième bras (7).

8. Dispositif de verrouillage de stationnement (1) selon l'une quelconque des revendications précédentes, **caractérisé en ce que** la première position de l'élément à ressort (8) est une position étendue de l'élément à ressort (8) et dans lequel la seconde position de l'élément à ressort 8 est une position comprimée de l'élément à ressort (8).

9. Dispositif de verrouillage de stationnement (1) selon la revendication 8, **caractérisé en ce que** l'élément à ressort (8) est un ressort hélicoïdal (8), dans lequel la première extrémité (8a) du ressort hélicoïdal (8) est agencée sur la deuxième partie (7b) du troisième bras (7), et la seconde extrémité (8b) du ressort hélicoïdal (8) est agencée sur une partie de réception de ressort (15) agencée de manière fixe sur l'élément de support (9) ou intégrée avec ce dernier, dans lequel la partie de réception de ressort (15) a un plan de surface s'étendant sensiblement dans une direction perpendiculaire à la direction de mouvement de l'élément de support (9) entre une première position et une seconde position.

10. Dispositif de verrouillage de stationnement (1) selon la revendication 9, **caractérisé en ce qu'**une ouverture (15a) est agencée dans la partie de réception de ressort (15) de l'élément de support (9), dans lequel l'ouverture (15a) est conçue pour recevoir au moins une portion de la deuxième partie (7b) du troisième bras (7), au moins lorsque le premier bras (3) est dans la seconde position et que l'élément de verrouillage mobile (13a) est dans la première position.

11. Dispositif de verrouillage de stationnement (1) selon la revendication 3 ou la revendication 3 et n'importe laquelle des revendications 4 à 10, **caractérisé en ce qu'**un premier rouleau (16a) est agencé de manière pivotante dans une partie de l'élément de support (9) au niveau d'un premier point de pivot, dans lequel le premier rouleau (16a) est conçu pour rouler tranquillement le long d'une partie de roulage (17b) du bras de verrouillage (17) opposée à la partie de mise en prise (17c) pendant le mouvement de l'élément de support (9) entre la première position et la seconde position, dans lequel la partie de roulage (17b) comprend une partie formant surface inclinée (17d) dans laquelle une direction d'extension de la partie formant surface inclinée (17d) est sensiblement non parallèle à la direction de mouvement de l'élément de support (9) entre une première position et une seconde position de sorte que la partie formant surface inclinée (17d) s'étend vers l'élément de support (9).

12. Dispositif de verrouillage de stationnement (1) selon la revendication 11, **caractérisé en ce que** le premier rouleau (16a) est sensiblement en forme de cylindre et a un premier rayon, dans lequel la longueur totale du premier rayon et la largeur du bras de verrouillage (17) au niveau de la partie de mise en prise / roulage, est plus grande que la distance entre un rayon extérieur correspondant aux dents (19a) de l'engrenage (19) et un premier point de pivot du premier rouleau (16a).

13. Dispositif de verrouillage de stationnement (1) selon la revendication 7 ou selon la revendication 7 et n'importe laquelle des revendications 8 à 12, **caractérisé en ce que** le premier bras (3), le deuxième bras (6) et le troisième bras (7) sont sensiblement formés comme des éléments plats.

14. Dispositif de verrouillage de stationnement (1) selon la revendication 7 et 9 et n'importe laquelle des revendications 11 et 12, **caractérisé en ce que** l'élément de support (9) est conçu pour un mouvement coulissant, dans lequel l'élément de support (9) comprend au moins deux parois latérales (9a, 9b), dans lequel au moins une partie du troisième bras (7) est agencée entre les parois latérales (9a, 9b), dans lequel le premier rouleau (16a) est agencé de manière pivotante dans les parois latérales (9a, 9b), et la partie de réception de ressort (15) est agencée de manière fixe entre les parois latérales (9a, 9b).

15. Dispositif de verrouillage de stationnement (1) selon la revendication 14, **caractérisé en ce que** l'élément de support (9) comprend une partie en saillie (9d) agencée de manière fixe dans une des parois latérales (9a, 9b) et s'étendant sensiblement dans une direction perpendiculaire au mouvement de l'élément de support (9), dans lequel l'élément de verrouillage mobile (13a) est conçu pour être en prise de façon amovible avec la partie en saillie (9d).

16. Dispositif de verrouillage de stationnement (1) selon la revendication 15, **caractérisé en ce que** le solénoïde (13) est agencé de sorte que l'élément de verrouillage mobile (13a) se déplace dans une direction sensiblement perpendiculaire à la partie en saillie (9d).

17. Dispositif de verrouillage de stationnement (1) selon l'une quelconque des revendications précédentes, **caractérisé en ce que** le dispositif de changement de vitesse (22) comprend une fourchette de commande (4) et une tige de commande (5), dans lequel la fourchette de commande (4) est agencée de manière coulissante sur la tige de commande (5), et dans lequel le premier bras (3) est agencé sur la fourchette de commande (4).

18. Dispositif de verrouillage de stationnement (1) selon l'une quelconque des revendications précédentes, **caractérisé en ce que** le dispositif de verrouillage à commande électrique (13) est agencé de manière fixe par rapport à l'élément de support (9), dans lequel l'élément de verrouillage mobile (13a) est conçu pour effectuer un mouvement linéaire entre les première et seconde positions, de sorte que lorsque l'élément de support (9) est dans une seconde position, l'élément de verrouillage mobile (13a) est dans une position le long d'un chemin de mouvement linéaire entre et comprenant les première et seconde positions.

19. Dispositif de verrouillage de stationnement (1) selon l'une quelconque des revendications précédentes 6 à 18, **caractérisé en ce que** le dispositif de verrouillage à commande électrique (13) est agencé de manière fixe à la structure fixe (10, 2).
